(19) Europäisches Patentamt
European Patent Office
Office européen des brevets

(11) Publication number: 0 115 689 B1

(12) **EUROPEAN PATENT SPECIFICATION**

(45) Date of publication of patent specification: 13.09.89

(51) Int. Cl.$^4$: C 04 B 35/65, C 04 B 35/58, C 25 C 3/08

(21) Application number: 83307833.0

(22) Date of filing: 21.12.83

# (54) Reaction sintered oxide-boride ceramic body and use thereof in electrolytic cell in aluminum production.

(30) Priority: 30.12.82 US 454671
30.12.82 US 454672

(43) Date of publication of application:
15.08.84 Bulletin 84/33

(45) Publication of the grant of the patent:
13.09.89 Bulletin 89/37

(84) Designated Contracting States:
BE CH DE FR GB IT LI SE

(56) References cited:
FR-A-1 133 144
FR-A-2 317 252
US-A-3 143 413
US-A-3 353 954
US-A-3 639 310
US-A-3 745 077
R. KIEFFER et al.: "Hartstoffe und Hartmetalle", 1953, pages 250-258, Springer-Verlag, Wien, CH.

The file contains technical information submitted after the application was filed and not included in this specification

(73) Proprietor: Corning Glass Works
Houghton Park
Corning New York 14831 (US)

(72) Inventor: DeAngelis, Thomas Peter
616 Groff Road
Horseheads New York (US)

(74) Representative: Smith, Sydney et al
Elkington and Fife Beacon House 113 Kingsway
London WC2B 6PP (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 115 689 B1

**Description**

The invention relates to oxide-boride ceramic bodies which can have one or more of oxide phases and one or more of boride phases.

This invention also relates to cells and components thereof employed in the electrolytic production of aluminum from a fussd bath, both by electrowinning and electrorefining processes, and to the aluminum production processes employing such cells and components.

Most commonly heretofore, these oxide-boride ceramic bodies have been of the type physically formed of ingredients corresponding to the crystalline phases in the ceramic bodies. By way of exemplary illustration, reference is made to the following prior art documents. US—A—2,270,607 discloses mixing, shaping and sintering at least 10 wt.% of oxides of Al, Zr, Be and/or Th with borides of W, Fe and the like to yield ceramic bodies of those same phases. US—A—3,067,146 discloses hot pressing or shaping and sintering of mixtures of $TiB_2$, $Al_2O_3$ and $Cr_2O_3$ to form ceramic bodies of substantially those same phases. US—A—3,296,002 discloses firing porous shaped mixtures of aluminum and alloys thereof with borides of Cr, Mo, Ti, W and Zr in oxidising atmosphere to form porous alumina-boride ceramics. US. Patent 4,022,584 discloses hot pressed or shaped and sintered mixtures of $Al_2O_3$, MgO and borides of metal from Groups 4b, 5b and 6b to provide ceramic bodies of substantially those same phases. US—A—4,110,260 discloses sintering shaped mixtures of a wide variety of ingredients including insulating ceramics such as alumina and zirconia and electroconductive substances such as borides of Ti and Zr. US—A—4,343,909 discloses sintering pressed mixtures of $Al_2O_3$, $ZrO_2$, $TiB_2$ and grain growth inhibitor to yield a product of substantially those same phases.

Generally those hot pressed or sintered physical mixtures require heating to relatively high temperatures of 1600—2000°C or so. Moreover, such ceramic bodies have properties which are dependent upon and limited by the inherent effects of the physical nature of their ingredients which are physically combined. The distribution and sizing of the phases are generally directly related to the particle sizing and mixing of ingredient powders. The powders are not always easily available in uniformly fine sizes for obtaining homogeneous distribution of phases and superior properties. Milling of powders to improve their sizing can lead to undesirable situations. In fact, some powders such as $TiB_2$ in sizes of about 5 µm or finer present fire and explosion hazard during milling due to their rapid reaction with oxygen in air under conditions of frictional heating.

Amongst numerous reactions for forming other types of multiphase bodies by an unusual reaction hot pressing process involving passage of electric current through the reaction mixture during the process, US—A—3,143,413 discloses reaction hot pressed, ceramics with phases of MgO and either $TiB_2$ or $ZrB_2$, but no details are given about the properties of such body made from −60 mesh reactant powders heated up to 1800—2300°C.

There has been a continuing need for oxide-boride ceramics with easily controlled and predictable composition, crystal structure (including uniform phase distribution and fine grain size) and related physical properties, and which can be easily and economically fabricated in a variety of shapes by heating at lower temperatures.

Most aluminum is made by the Hall-Heroult process comprising electrolysis of alumina in a molten cryolite bath using carbon anodes and cathodes. The aluminum settles under the cryolite bath on the carbon cathode. However, the aluminum does not wet the carbon cathode and electromagnetic forces in the cell produce waves in and the humping of the molten aluminum. To ensure that the carbon cathode floor of the cell is always completely covered with aluminum, a relatively thick cathode layer, pad or pool of aluminum is maintained, which continues to be subject to waving and humping movement. The latter factor necessitates substantial anode-cathode spacing or gap to avoid shorting between the anode and the moving aluminum cathode pool. It is that spacing or gap that causes considerable electrical energy loss in the resistance heating of the cryolite-aluminum cell bath therein.

Various cell designs of drained cathodes and of cathode pool packing, baffles or weirs have been proposed to alleviate the aluminum movement and energy problem. Also, various aluminum-wettable materials and bodies have been proposed without much success for economically accommodating cell designs that can alleviate these problems. There remains the basic need for cathodes and cathode pool structures of aluminum wettable, durable bodies which can be readily and economically fabricated.

Summary of the invention

This invention substantially overcomes the aforesaid limitations of the prior art and enables the practical attainment of greater technical and economic ease and flexibility by providing ceramic bodies of oxide and boride phases with specially tailored and improved properties as noted herein, and by providing certain components of an electrolytic aluminum production cell, which in use are normally in contact with molten aluminum or in electrical contact with other components which are normally in contact with molten aluminum with surface and/or inner portions of the components made of reaction sintered cermet as defined herein, which is wettable by and durable in molten aluminum as well as being electrically conductive. The invention involves not only the new components, but also the cells for and methods of producing aluminum by electrolysis, including both electrowinning and electrorefining aluminum.

The invention is characterized by the discovery

of a novel reaction sintered ceramic body and the method of forming it, which body is characterized by uniformly fine-grained and intimately interdispersed phases of oxide and boride easily obtained from reactants generally having substantially larger particle sizing than the grain size of the phases in the ceramic body, viz. usually one order of magnitude larger. The reaction hot pressed body of this invention is noted for virtual absence of open porosity, toughness and hardness for wear resistance, corrosion/erosion resistance to molten aluminum (with predomonantly $Al_2O_3$ phase or phases), low electrical resistivity, good thermal shock and oxidation resistance. It is also notable that these valuable properties can be attained by heating the mixture of reactants to temperature less than 1600°C and without need for any grain growth inhibitor or sintering aid.

The invention is a reaction sintered oxide-boride ceramic body or cell component consisting essentially of a fine-grained, homogeneous, intimate interdispersion of:

(a) 10—90 (preferably 25—90) mole percent of boride phase or phases having a maximum grain size substantially (i.e. at least 95 volume percent) not greater than 15 μm and being bromide of one or more of the elements of Groups 3b including lanthanide and actinide series elements, 4b, 5b and 6b, and

(b) 10—90 (preferably 10—75) mole percent of oxide phase or phases having a maximum grain size substantially (i.e. at least 95 volume percent) not greater than 15 μm and being oxide of one or more of the elements of Groups 3a, 4a, 3b, 4b, 5b, 6b and 8;

which body is prepared by the process comprising;

(c) admixing particulate reactants of maximum particle size substantially (i.e. at least 95 volume percent) not greater than 150 μm and being elements, compounds, intermetallic compounds, alloys or combination thereof in stoichiometric proportions to substantially form the boride and oxide phases, and

(d) shaping and heating the admixture to form the reactive sintered body, and heating being done in nonreactive atmosphere and at temperature at which the reaction and sintering occurs between the reactants to substantially form the boride and oxide phases.

Reaction sintering involves the dual effects of reaction between and sintering together of the admixed reactants at temperature causing the reaction to occur and be substantially completed. It may be effected at atmospheric, subatmospheric or superatmospheric pressure. The latter condition involves the substantially simultaneous shaping and heating steps of hot pressing to produce a body of the invention with very little or no open porosity and highest strength properties, although some preliminary separate pressing or heating of the reactant admixture may be advantageously done. Where open porosity is desired in an otherwise tough and hard body of the invention, the separate heating step at atmospheric or subatmospheric pressure may be employed sequentially following the shaping step.

Of course, reaction temperature is governed by the particular reactants and their identified reaction temperature at whatever pressure is selected for performing the heating step.

The body of the invention may contain, as part of the boride and/or oxide phases, diluent which is a nonreacted portion of the reactant admixture as a stoichiometric excess amount of a reactant and/or as a boride or oxide according to the aforesaid invention definition but different than the reactants.

Generally the element forming the boride cation is different than the element forming the oxide cation.

## Brief description of the drawing

The sole figure is a schematic, vertical cross-sectional view of an aluminum electrowinning cell incorporating components comprising the composite body in accordance with the invention.

## Detailed description

Part of the invention will be illustrated by reference to one exemplary type of production cell and process, but it is capable of being adapted to other types of electrolytic aluminum production cells and processes, including electrorefining.

The sole figure schematically shows a cell comprising a carbon liner and cathode base 1 in a heat-insulating shell 2 and with a cathode current collector or bar 3 embedded in the liner 1. Within the liner 1 is a shallow or thin cathodic layer of film 4 of molten aluminum and an alumina-containing molten cryolite electrolyte 5 at a temperature of 940—1000°C. This electrolyte commonly consists of sodium cryolite ($Na_3AlF_6$) as the major component plus about 4—10 wt.% calcium flouride, about 2—10 wt.% aluminum flouride and about 2—8 wt.% alumina. However, as desired, the electrolyte may be of other alumina-containing compositions. The aluminum layer 4 and molten electrolyte 5 are surrounded by a crust or frozen layer or "freeze" 6 of the solidified electrolyte. Anodes consisting of prebaked blocks of carbon 7, which are suspended by anode current feeders 8, dip into the molten electrolyte 5 above the shallow aluminum layer or film 4, with a spacing d being maintained between the bottom of blocks 7 and the top of the thin layer or film 4. Commonly commercial cells have several rows of pairs of anodes 7. Blocks 7 are generally of the same size in each cell. Such size can range from about 60×40×40 cm for small cells to about 150×100×70 cm for large cells. Operating anode current density is usually between 6 and 10 kA/m².

The carbon cathode base 1 has its upper surface, which faces anode blocks 7, covered by a cathode layer 9 of slabs, segments or plates positioned either closely together or in spaced

relation to allow the molten aluminum formed as film 4 on layer 9 to drain continuously off of the top of layer 9 into suitable reservoir or collection basin (not shown). The segments of layer 9 can be either fastened to the carbon base 1 (e.g. by pegs of carbon or the material of layer 9) or merely placed thereon, with mating surfaces providing good electrical contact as needed. These segments of layer 9 (or surface portion thereof) are one of the components desirably formed of reaction sintered oxide-boride ceramic according to the invention. Such segments, plates or slabs of the reaction sintered ceramic can be about 0.5—5 cm thick e.g. approximately 2.5 cm. They can be of any suitable length, width and geometric shape. For convenience of manufacture and installation, the slabs can be made with length and width dimensions in the range of about 5—15 cm, e.g. about 10 cm., for square or hexagonal shapes.

By using this layer 9 of the ceramic plates of the invention as an operative aluminum-wettable surface in contact with the cathodically collected molten aluminum, layer 4 of such molten aluminum can be easily maintained thin enough to avoid significant waving or humping therein, e.g. as a thin film typically less than about 1 mm or as a shallow layer of desired constant thickness, e.g. up to about 1 cm, if appropriate weirs or restraining means (not shown) are used at edges of layer 9 (which may also be formed of the ceramic according to this invention). In either case, no significant waving or humping occurs in the thin aluminum layer 4 and the distance d can be greatly and reliably minimized, e.g. to about 2—4 cm, to reduce electrical energy loss.

Further electrical energy savings may be achieved when even further portions of cell lining 1 are also constructed of the ceramic components of the invention. Even the cathode current collector 3 (or inner portion thereof) may be formed of those ceramic components.

If carbon anodes 7 are employed, their position with respect to the desired spacing d can be adjusted as the blocks 7 wear away, with computer-controlled anode feed devices maintaining the gap d relatively constant. Alternatively, the carbon anode 7 can be replaced with oxygen-evolving anodes that remain relatively dimensionally stable, in which case the cell may be operated at higher current densities up to 20—50 $kA/m^2$. Optionally these anodes 7 may have a protective and/or reinforcing casing 10, e.g. of alumina, to reduce the rate of wear and loss of carbon blocks 7.

In producing aluminum in the cell shown in the drawing, additional alumina is fed into the electrolyte 5 as it becomes depleted of alumina by its electrolytic reduction to aluminum which settles onto and drains off of layer 9 in conventional manner.

Body or component preparation

It is believed that reaction sintering relies on the reaction having a substantial negative heat of formation as the driving force for the reaction. The products or bodies formed must have lower free energy of formation than the reactants from which they were prepared. The elements of the groups of the Periodic Table as recited in the description of the invention are selected for the invention body so as to conform to these principles.

Reaction sintering is initiated by heating the shaped mixture. At the reaction initiation temperature, the reactants begin to react and liberate a substantial amount of heat. This exotherm causes a sharp temperature rise in the reactant powder mixture. It is believed that this rapid temperature rise permits rapid diffusion of the reactants within the mixture, which causes either hot pressing compaction or sintering shrinkage under atmospheric or subatmospheric pressure as well as further chemical reaction to occur quickly. The reaction initiating temperature is generally much lower than the temperature necessary to attain a dense body by conventional hot pressing or separate pressing and sintering of preformed phase ingredients where no reaction occurs.

Several processing parameters may be adjusted to optimize the conduction of the reaction sintering and the properties of the resultant ceramic body. Some of these parameters are: type, purity and surface area of the particulate reactants; stoichiometry of the reactant mixture; pretreatment of the reactants, rate of heating; magnitude of applied pressure before and/or during heating; post heating treatments; and geometry of the body or product.

Reaction sintering or admixtures according to this invention produces articles or bodies with the boride and oxide phases having very small grain size, generally about one order of magnitude smaller than the particle size of the starting reactant powders. The reaction sintered ceramic bodies can be easily prepared with maximum grain sizes of the boride and oxide phases being substantially (i.e. at least 95 volume percent) not greater than 5 µm (preferably less than 2 µm) or even with mean grain sizes of such phases being substantially (i.e. at least 95 volume percent) not greater than 3.4 µm. These very fine grain sizes can be attained by using reactants with maximum particle sizes substantially (i.e. at least 95 volume percent) not greater than 44 µm or with mean particle sizes (mps) less than about 20 µm. Grain growth is usually not experienced because the products or bodies can be made at significantly lower temperatures with shorter hold times at heating temperature than by conventional nonreactive manufacturing techniques. Achieving such small grain sizes is often difficult if not impractical to accomplish using conventional nonreactive techniques because either preformed phase powders are not readily available in such small particle size of less than 5 µm for the reasons noted above or irregular grain growth occurs at the higher processing temperatures in the absence of effective grain growth inhibitor.

Generally the particulate reactants are mixed in the stoichiometric proportions to form the desired product phases. For example, the following molar proportion formula describes exemplary reaction mixture and product phases:

$$6TiO_2+AlB_{12}+7Al \rightarrow 6TiB_2+4Al_2O_3 \quad (*)$$

However, nonstoichiometric proportions (e.g. of $TiO_2$) may be used in order to vary the properties of the product or to control the reaction process. Powdered diluent material may also be added to the reactant mixture. The diluent may be or contain one of the elements of the reactants or may be the same as one of the reaction-produced phases in the products or may be other suitable material, any of which may be used to control the reaction sintering or properties of the resultant product. The amount of diluent or diluents must be less than that amount which would prevent the reaction sintering from taking place.

The reactants can be mixed or blended in any suitable manner known to those skilled in ceramic technology for yielding an intimate, homogeneous mixture of reactant particles, e.g. by ball milling in dry or wet condition.

For very dense products, the hot pressing procedure, including hot isostatic pressing, is employed. The mixed reactants are charged into a mold. If desired, those reactants may be given pretreatments such as dehydration, degassing or burn-out of binder, provided the pretreatment temperature is kept below the reaction initiation temperature. It is advantageous to precompact the reactant mixture at room temperature and at 50—100% hot pressing pressure to ensure a uniformly compacted product after hot pressing. This was routinely done in making samples of the invention. For common hot pressing with a mold comprising an annular die with upper and lower plungers, the mold for precompaction (and even pretreatment) is preferably the same one used in subsequent hot pressing. The mold can be of any material not adversely reactive with the reaction mixture and that can withstand desired pressures up to 15,000 psi (about 1055 kg/cm$^2$) or more. Graphite molds have been found very suitable for pressures up to 10,000 psi (about 700 kg/cm$^2$) and were exclusively used in making the samples of the invention. At least the precompaction pressure is usually applied to the charged mold and a suitable atmosphere is provided to completely contact the charged mold before heating is begun to effect exchange reaction hot pressing. A moderate vacuum (e.g. about $1\times10^{-4}$ Torr) was satisfactorily employed in making the samples of the invention; however, inert gas atmosphere may also be employed for the same purpose of protecting the reactants and the mold from adverse air oxidation. As necessary, the pressure is increased to the full load during heating to or at the maximum hot pressing temperature. To assure good body density, full pressure should be at least 2000 psi (about 140 kg/cm$^2$). Heating can be done in any suitable hot pressing furnace, such as an induction heating furnace or electric resistance heating furnace used to make samples of the invention, which provides very rapid heat-up. Heating rates satisfactorily employed ranged between 9 and 25°C/minute, the slower rates being used with reactant mixtures evolving hydrogen that is drawn off by the vacuum system. Heating progresses to a temperature at which the reaction sintering is initiated. That event is marked by a rapid temperature rise in the mold due to exothermic heat evolution from the reaction. When the maximum temperature and pressure from the reaction hot pressing are attained, they are usually held for at least some short period to assure complete reaction sintering, e.g. about 1—2 hours for products ranging between 1.5—2 inches (about 3.8—5.1 cm) in diameter and about 0.2—0.5 inch (about 0.5—1.3 cm) thick as in the cases of the samples made of the invention. Of course, larger plates of greater thickness (e.g 1 inch or 2.5 cm) may need to be held slightly longer in hot pressing, perhaps up to 5—6 hours. Thereafter, the molds containing the samples are cooled in the furnace under protective atmosphere at furnace cooling rate and the pressure is held on the samples until they were cooled to about room temperature. Then the molds are removed from the furnace and the samples are pressed out of the annular mold body.

For bodies of lesser density, the reactant mixture can be fully compacted or shaped at room temperature generally at pressures up to 60,000 psi (about 4.2 tons/cm$^2$) or more, but preferably between $10—50\times10^3$ psi (about 0.7—3.5 tons/cm$^2$), to yield a green (i.e. unfired) body, which is subsequently sintered at atmospheric pressure. Preforming of the green body can be done by a suitable ceramic fabrication process, e.g. dry or wet pressing, isostatic pressing, slip casting, extrusion, injection molding, doctor blading, etc.

The multiphase ceramic bodies of this invention can be specially designed to have selected useful properties from a variety of choices depending upon their composition and processing. Generally they are very refractory and thermal shock resistant. They are also generally electroconductive. Many have low electrical resistivity and can function as electrodes or electrical conductors in a variety of applications. With resistance to chemical attack, such electrode and conductor applications can be in industrial electrochemical processes including electrolytic metal production (electrowinning and electrorefining) cells, batteries and fuel cells. Some bodies can have adequate electrical resistance to function as electrical resistance elements such as heating elements. Most of them are wear-resistant and hard. They can also exhibit good strength and toughness. Consequently, those bodies can also usefully serve as cutting tool tips, grinding media, high temperature bearings, engine components and other structural parts. In their more porous form, they may serve, for example, as filters for molten metal, or as high surface area or catalytic devices.

The above-described reaction sintered ceramic

body, preferably in hot pressed form, can be used for components of an electrolytic aluminum production (electrowinning and electrorefining) cell in contact with molten aluminum (but preferably isolated from contact by cryolite) when the oxide phase is or phases are predominantly $Al_2O_3$ and the boride phase is or phases are boride one or more of the elements selected from Groups 4b, 5b and 6b. Especially desirable is the body or diboride of metal selected from Group 4b (particularly titanium) and oxide of aluminum and/or boron. Molten cryolite has some tendency to corrode/erode this reaction sintered ceramic body. In their more porous form, they may also serve as cell components which are not contacted by molten cryolite.

Body A

Body A of the invention was formed in accordance with the previous molar formula (*) as follows: The batch components consisted of 58.1 wt.% $TiO_2$ powder of 1.2 µm mps, 19.0 wt.% $AlB_{12}$ powder of 11 µm mps and 22.9 wt.% Al powder of −325 mesh. These reactants were dry mixed without binder in a revolving plastic jar with alumina balls. That mixture was hot pressed in a graphite mold and in a vacuum at a maximum reaction sintering temperature of 1500°C and 6000 psi (421.8 kg/cm$^2$) for 2 hours to yield the body exhibiting the phases of $TiB_2$ (M—major phase peaks), alpha $Al_2O_3$ (m—minor phase peaks) and Al (T—trace phase peaks), and having a quantative chemical analysis (by weight) of: 25.0% Al, 34.5% Ti, 24.6% $O_2$, 0.098% C and 0.017% $N_2$. Body A also had <2 µm boride and oxide grain sizes, a density of 4.11 g/cm$^3$, 0% open porosity, Rockwell A hardness 94 and 117.5 µΩ-cm electrical resistivity at 25°C.

Samples of Body A were formed into two cutting tips of cutting tools with the standard diamond shaped profile and tested in a customary metal cutting test. The test involved a standardized procedure of cutting a 2 inch (5.08 cm) diameter bar or workpiece of Viscount 44 high-nickel alloy steel for each test cycle with the experimental cutting tips bonded to a cutting tool base so as to have 0° rake angle and 4° clearance angle from the workpiece. Depth of cut was 0.032 inch (0.81 mm). The workpiece was rotated at 450 rpm to provide a cutting rate of 220 surface feet/minute (5.59 m/min). The lateral feed rate axially along the workpiece was 0.005 inch/revolution (0.127 mm/revolution) and the lateral length of the workpiece cut was 2 inches (5.08 cm). Cutting was done with and without spraying of customary cutting oil lubricant onto the cutting tip at the point of contact with the workpiece. The chips of metal removed from the workpiece during this test were classified as follows, with the best cutting performance being Class 1 and the poorest cutting performance being Class 3:

Class 1—a single long continuous chip.

Class 2—two or more moderately long continuous chips.

Class 3—short segmented or discontinuous chips. The results of testing the cutting tip samples of Body A in the above-described test were as follows:

| | Sample 1 | Sample 2 |
|---|---|---|
| Lubrication | No | Yes |
| Class of chips | 1 | 1 |
| Tip edge condition | No visible wear | No visible wear |
| Metal build up on tip edge | None | None |

Sample 1 satisfactorily performed cutting for 65 cycles before failure, at which time the edge of the tip broke and no longer cut the workpiece.

Body B

Body B of the invention was prepared according to the molar formula:

$$2AlB_2+2TiO_2 \rightarrow 2TiB_2+Al_2O_3+0.5\ O_2$$

(reactants) (product phases) (gas)

from a dry-mixed reactant mixture consisting of 37.8 wt.% $AlB_2$ of 9.2 µm mps and 62.2 wt.% $TiO_2$ of 1.2 µm mps. After hot pressing in the usual manner at 1300°C and 4000 psi (281.2 kg/cm$^2$), the resultant body was found to have the phases of $TiB_2$(M) and 9 $Al_2O_3 \cdot 2B_2O_3$(M). Apparently the latter phase formed instead of oxygen gas evolution. The grain size of the $TiB_2$ phase was estimated to be generally in the range of 2—5 µm with the largest grain being 6 µm. It was intimately interdispersed with the other phase, which filled the interstices between the $TiB_2$ grains. Presumably, the $9Al_2O_3 \cdot 2B_2O_3$ phase was a viscous liquid at the hot pressing temperature. Body B had a density of 3.7 g/cm$^3$ 0% open porosity and high electrical conductivity. Bodies A and B are of a type of material that is wetted by molten aluminum, but tends to be corroded by molten cryolite and similar salts. Thus, these bodies may serve as cathode elements 9 in contact with molten aluminum, but which preferably remain out of contact with the electrolyte. Alternatively, they may serve as collector bars or electrical lead bars 3 to the cathode elements in an electrolytic aluminum production cell.

Two samples of Body B were formed into cutting tips in the same manner as Body A samples and subjected to the earlier described metal cutting test. The results were:

| | Sample 1 | Sample 2 |
|---|---|---|
| Lubrication | No | Yes |
| Class of chips | 1 | 1 |
| Tip edge condition | No visible wear | No visible wear |
| Metal build up on tip edge | Slight | None |

Body C

Body C of the invention was prepared without hot pressing in accordance with the molar formula:

$AlB_2+2TiO_2+xAl_2O_3 \rightarrow 2TiB_2+(1+x)\,Al_2O_3+ 0.5\,O_2$
(reactants) (diluent) (product phases) (gas)

from a dry-mixed reaction mixture consisting of 7.6 wt.% $AlB_2$ of 9.2 μm mps, 12.4 wt.% $TiO_2$ of 1.2 μm mps and 80 wt.% $Al_2O_3$ of <5 μm. That mixture was isostatically pressed at about 5000 psi (351.5 kg/cm²) into green discs which were then fired into argon at 1500°C for 6 hours. The resulting body had the phases of $TiB_2$(M), $Al_2O_3$(M) and $9Al_2O_3 \cdot 2B_2O_3$(M). Body C also had ≤5 μm boride and oxide grain sizes, 3.3 g/cc density, 12.8% open porosity and 8% linear firing shrinkage. This electrically conductive body can be employed as a cell component such as key 24 as shown in Figs. 1a through 2 of U.S. Defensive Publication T993,002 of April 1, 1980, which is incorporated herein by reference.

Body D

Another reaction hot pressed body of the invention was made from a dry-mixed −325 mesh reactant mixture prepared in accordance with the molar formula:

$$3TiO_2+3B_2O_3+10Al \rightarrow 5Al_2O_3+3TiB_2.$$

That mixture was hot pressed at 1400°C and 5000 psi (351.5 kg/cm²) for 2 hours. About 95 volume percent of the grains of both oxide and boride phases were less than or equal to 7 μm while the largest grain was 10 μm. The resultant oxide-boride body has a density of 3.8 g/cc and 2.6% open porosity. This electrically conductive body is wettable by and resistant to molten aluminum. For example, it may form a surface portion of liner 1 that desirably remains out of contact with molten cryolite or an inner portion of collector bar 3.

Other reaction sintered ceramic bodies (with or without hot pressing as desired) can be formed by appropriately selecting other reactant mixtures within the invention definition. The following molar formulas are illustrative of such other selections:

$3\,TiO_2+4\,Al+6B \rightarrow 3TiB_2+2\,Al_2O_3$
$2Al+B_2O_3+TiH_2 \rightarrow Al_2O_3+TiB_2+H_2$
$TiAl_2+B_2O_3 \rightarrow TiB_2+Al_2O_3$
$2\,ZrO_2+2\,AlB_2 \rightarrow 2\,ZrB_2+Al_2O_3+0.5\,O_2$
$HfO_2+2NiB \rightarrow HfB_2+2\,NiO$
$SiB_4+Cr_2O_3 \rightarrow 2\,CrB_2+SiO_2+0.5\,O_2$
$La_2O_3+3\,NiB+9B \rightarrow 2\,LaB_6+3\,NiO$
$TiO_2+Zr+2B \rightarrow ZrO_2+TiB_2$
$CrO_3+CeB_2 \rightarrow CeO_2+CrB_2+0.5\,O_2$
$ZrO_2+MoB_2 \rightarrow ZrB_2+MoO_2$
$HfO_2+Pb+2B \rightarrow HfB_2+PbO_2$
$Nb_2O_5+2AlB_2+Al \rightarrow 2NbB_2+1.5\,Al_2O_3+0.25\,O_2$
$Tho_2+VB_2 \rightarrow VO_2+ThB_2$
$Cr_2O_3+2AlB_2 \rightarrow 2CrB_2+Al_2O_3$

Other reactions within the invention may also form complex oxide phases and/or complex boride phases, e.g. solid solutions.

**Claims**

1. A reaction sintered oxide-boride ceramic body characterised in that it consists essentially of a fine-grained, homogeneous, intimate interdispersion of:

(a) 10—90 mole percent of boride phase(s) having a maximum grain size at least 95 volume percent not greater than 15 μm and being boride of one or more of the elements of Groups 3b (including lanthanide and actinide series elements), 4b, 5b and 6b, and

(b) 10—90 mole percent of oxide phase(s) having a maximum grain size at least 95 volume percent not greater than 15 μm and being oxide of one or more of the elements of Groups 3a, 4a, 3b, 4b, 5b, 6b and 8;

which body is prepared by the process comprising:

(c) admixing particulate reactants of maximum particle size at least 95 volume percent not greater than 150 μm and being elements, compounds, intermetallic compounds, alloys or combinations thereof in stoichiometric proportions substantially to form the boride and oxide phases, and

(d) shaping and heating the admixture to form the reaction sintered body, the heating being done in nonreactive atmosphere and at temperature at which the reaction and sintering occurs between the reactants substantially to form the boride and oxide phases.

2. A body as claimed in claim 1 characterised in that the shaping and heating are substantially simultaneous steps of hot pressing.

3. A body as claimed in claim 1 or claim 2, characterised in that the maximum grain size of the boride and oxide phases is at least 95 volume percent not greater than 5 μm and the maximum particle size of the reactants is at least 95 volume percent not greater than 44 μm.

4. A body as claimed in claim 3 characterized in that the mean grain size of the boride and oxide phases is at least 95 volume percent not greater than 3.5 μm.

5. A body as claimed in any of claims 1 to 4 characterised in that the boride is of one or more elements of Groups 4b, 5b and 6b, and the oxide is predominantly $Al_2O_3$.

6. A body as claimed in any of claims 1 to 4

characterised in that the boride is of one or more elements of Group 4b.

7. A body as claimed in any of claims 1 to 6 characterised in that it contains 25—90 mole percent of the boride phase(s) and 10—75 mole percent of the oxide phase(s).

8. A component of an electrolytic aluminum production cell which in use is normally in contact with molten aluminum or in electrical contact with another component which is normally in contact with molten aluminum, characterised in that it has a surface and/or inner portion made of the reaction sintered oxide-boride ceramic body of any of claims 1 to 7.

9. An electrolytic aluminum production cell comprising one or more components as claimed in claim 8.

10. A method of producing aluminum by electrolysis in an electrowinning or electrorefining cell characterised by the use of a cell component as claimed in claim 8.

11. A method of forming a body as claimed in claim 1 comprising

(a) admixing the particulate reactants, and

(b) shaping and heating the admixture to form the reaction sintered body.

**Patentansprüche**

1. Reaktionsgesinterter Oxid-Boridkeramikkörper, dadurch gekennzeichnet,

daß er im wesentlichen besteht aus einer feinkörnigen, homogenen, innigen Interdispersion aus:

a) 10—90 Molprozent Boridphase(n) mit einer maximalen Korngröße von wenigstens 95 Volumenprozent von nicht größer als 15 µm, wobei das Borid aus einem oder mehreren der Elemente der Gruppen 3b (einschließlich der Elemente der Lanthaniden- und Aktinidenreihen), 4b, 5b und 6b besteht, und

b) 10—90 Molprozent Oxidphase(n) mit einer maximalen Korngröße von wenigstens 95 Volumenprozent von nicht größer als 15 µm, wobei das Oxid aus einem oder mehreren der Elemente der Gruppen 3a, 4a, 3b, 4b, 5b, 6b und 8 besteht;

wobei dieser Körper durh das folgende Verfahren hergestellt ist:

c) Beimischen der partikelförmigen Reaktanten mit einer maximalen Partikelgröße von wenigstens 95 Volumenprozent von nicht größer als 150 µm, und bestehend aus Elementen, Verbindungen, intermetallischen Verbindungen, Legierungen oder Kombinationen hiervon in stöchiometrischen Anteilen, um im wesentlichen die Borid- und Oxidphasen zu bilden, und

d) Gestalten und Erhitzen der Beimischung, um den reaktionsgesinterten Körper zu bilden, wobei das

Erhitzen in einer nichtreaktiven Atmosphäre und bei einer Temperatur durchgeführt wird, bei welcher die Reaktion und das Sintern zwischen den Reaktanten stattfindet, um im wesentlichen die Borid- und Oxidphasen zu bilden.

2. Körper nach Anspruch 1, dadurch gekennzeichnet, daß das Gestalten und Erhitzen im wesentlichen gleichzeitige Schritte des Heißpresses sind.

3. Körper nach Anspruch 1 oder 2, dadurch gekennzeichnet, daß die maximale Korngröße der Borid- und Oxidphasen wenigstens 95 Volumenprozent von nicht größer als 5 µm und die maximale Partikelgröße der Reaktanten wenigstens 95 Volumenprozent von nicht größer als 44 µm beträgt.

4. Körper nach Anspruch 3, dadurch gekennzeichnet, daß die mittlere Korngröße der Borid- und Oxidphasen wenigstens 95 Volumenprozent von nicht größer als 3,5 µm beträgt.

5. Körper nach einem oder mehreren der Ansprüche 1 bis 4, dadurch gekennzeichnet, daß das Borid aus einem oder mehreren der Elemente der Gruppen 4b, 5b und 6b besteht und das Oxid überwiegend $Al_2O_3$ ist.

6. Körper nach einem oder mehreren der Ansprüche 1 bis 4, dadurch gekennzeichnet, daß das Borid aus einem oder mehreren der Elemente der Gruppe 4b besteht.

7. Körper nach einem oder mehreren der Ansprüche 1 bis 6, dadurch gekennzeichnet, daß er 25 bis 90 Molprozent der Boridphase(n) und 10 bis 75 Molprozent der Oxidphase(n) enthält.

8. Bestandteil einer elektrolytischen Zelle zur Aluminiumherstellung, die während des Betriebs normalerweise in Kontakt mit geschmolzenem Aluminium oder in elektrischem Kontakt mit einem anderen Bestandteil steht, der sich normalerweise in Kontakt mit dem geschmolzenen Aluminium befindet, dadurch gekennzeichnet, daß er ein Oberfläche und/oder einen inneren Abschnitt besitzt, die bzw. der aus dem reaktionsgesinterten Oxid-Boridkeramikkörper nach einem oder mehreren der Ansprüche 1 bis 7 hergestellt wurde.

9. Elektrolytische Zelle zur Aluminiumherstellung, enthaltend eine oder mehrere Bestandteile nach Anspruch 8.

10. Verfahren zur Herstellung von Aluminium durch Elektrolyse in einer elektrolytischen Extraktions- oder Raffinationszelle, dadurch gekennzeichnet, daß ein Zellbestandteil nach Anspruch 8 verwendet wird.

11. Verfahren zum Formen eines Körpers nach Anspruch 1, bestehend aus

a) Beimischen der partikelförmigen Reaktanten und

b) Gestalten und Erhitzen der Beimischung, um den reaktionsgesinterten Körper zu formen.

**Revendications**

1. Un corps céramique d'oxyde-borure fritté par réaction, caractérisé en ce qu'il est essentiellment constitué d'une dispersion mutuelle intime, homogène, à grains fins, de:

(a) 10 à 90 moles pour cent d'une ou plusieurs phases de borure ayant, pour au moins 95 pour cent de leur volume, une grosseur de grains maximale non supérieure à 15 µm et consistant en borure de l'un ou plusieurs des éléments des

Groupes 3b (y compris les éléments des séries des lanthanides et des actinides), 4b, 5b et 6b, et

(b) 10 à 90 moles pour cent d'une ou plusieurs phases d'oxyde ayant, pour au moins 95 pour cent de leur volume, une grosseur de grains maximale non supérieure à 15 µm et consistant en oxyde d'un ou plusieurs des éléments des Groupes 3a, 4a, 4b, 5b, 6b et 8;

ce corps étant fabriqué par le procédé consistant à:

(c) mélanger des substances réactives particulaires ayant, pour au moins 95 pour cent de leur volume, une grosseur de particules maximale non supérieure à 150 µm et consistant en éléments, composés, composés intermétalliques, alliages ou combinaisons d'entre eux, en des proportions stoechiométriques convenant pour former sensiblement les phases de borure et d'oxyde, et

(d) façonner et chauffer le mélange pour former le corps fritté par réaction, le chauffage étant effectué dans une atmosphère non réactive et à une température à laquelle se produisent la réaction et le frittage entre les substances réactives de façon à former les phases de borure et d'oxyde.

2. Un corps tel que revendiqué dans la revendication 1, caractérisé en ce que le façonnage et le chauffage sont des étapes sensiblement simultanées de pressage à chaud.

3. Un corps tel que revendiqué dans la revendication 1 ou la revendication 2, caractérisé en ce que la grosseur de grains maximale des phases de borure et d'oxyde est, pour au moins 95 pour cent de leur volume, non supérieure à 5 µm et la grosseur de particules maximale des substances réactives est, pour au moins 95 pour cent de leur volume, non supérieure à 44 µm.

4. Un corps tel que revendiqué dans la revendication 3, caractérisé en ce que la grosseur de grains moyenne des phases de borure et d'oxyde est, pour au moins 95 pour cent de leur volume, non supérieure à 3,5 µm.

5. Un corps tel que revendiqué dans l'une quelconque des revendications 1 à 4, caractérisé en ce que le borure est un borure d'un ou plusieurs éléments des Groupes 4b, 5b et 6b, et l'oxyde est en majeure partie du $Al_2O_3$.

6. Un corps tel que revendiqué dans l'une quelconque des revendications 1 à 4, caractérisé en ce que le borure est un borure d'un ou plusieurs éléments du Groupe 4b.

7. Un corps tel que revendiqué dans l'une quelconque des revendications 1 à 6, caractérisé en ce qu'il contient 25 à 90 moles pour cent de la ou des phases de borure et 10 à 75 moles pour cent de la ou des phases d'oxyde.

8. Un élément d'une cuve électrolytique de production d'aluminium qui, en service, est normalement en contact avec de l'aluminium fondu ou en contact électrique avec un autre élément qui est normalement en contact avec de l'aluminium fondu, caractérisé en ce qu'il possède une surface et/ou une partie intérieure constituée du corps céramique d'oxyde-borure fritté par réaction de l'une quelconque des revendications 1 à 7.

9. Une cuve électrolytique de production d'aluminium, comprenant un ou plusieurs éléments tels que revendiqués dans la revendication 8.

10. Un procédé de production d'aluminium par électrolyse dans une cuve d'extraction électrolytique ou d'affinage électrolytique, caractérisé par l'utilisation d'un élément de cuve tel que revendiqué dans la revendication 8.

11. Un procédé pour former un corps tel que revendiqué dans la revendication 1, consistant à

(a) mélanger les substances réactives particulaires, et

(b) façonner et chauffer le mélange pour former le corps fritté par réaction.

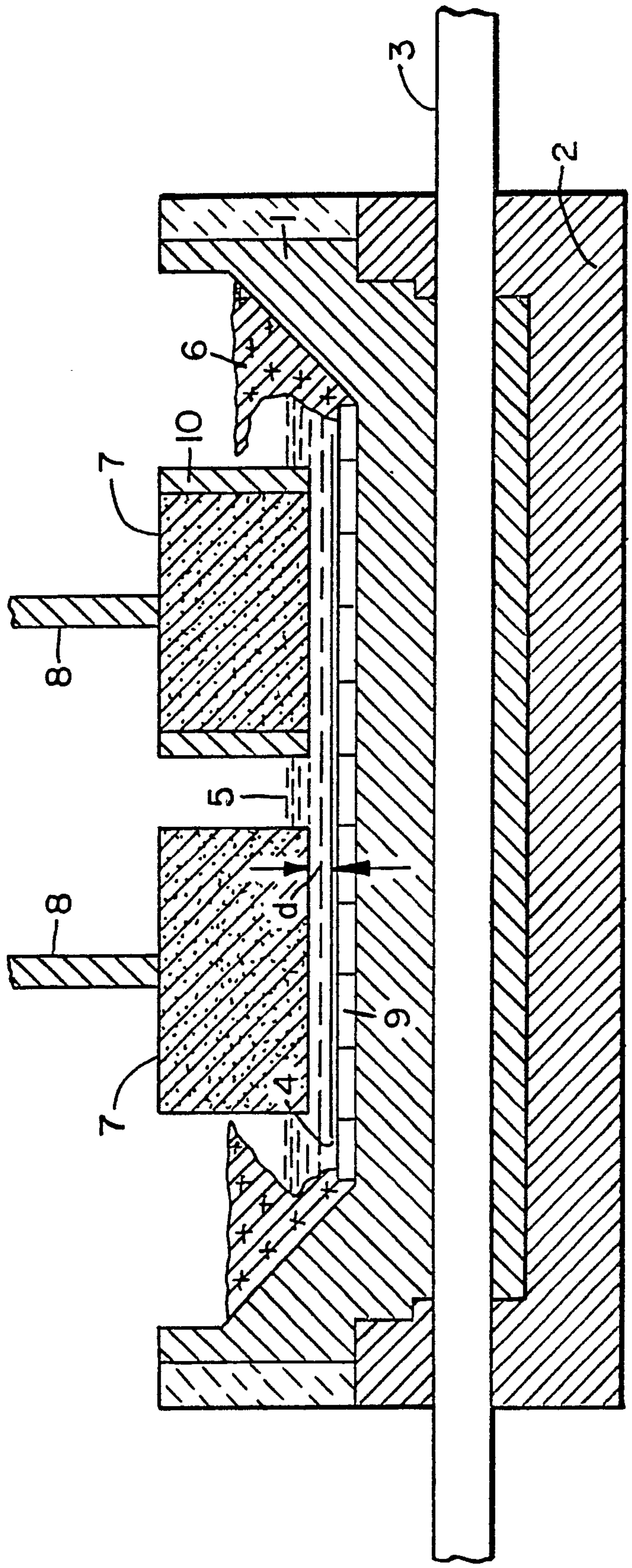
3
2
1
6
10
7
8
5
d
8
9
4
7